(19) Europäisches Patentamt
European Patent Office
Office européen des brevets

(11) Veröffentlichungsnummer: **0 181 281**
**B1**

(12) **EUROPÄISCHE PATENTSCHRIFT**

(45) Veröffentlichungstag der Patentschrift: **08.03.89**

(21) Anmeldenummer: **85810434.2**

(22) Anmeldetag: **25.09.85**

(51) Int. Cl.⁴: **C07C 125/065**, C07C 155/02, C07C 127/15, C07C 143/74, C07C 147/02, C07C 149/437, C08F 20/36, C08F 20/38, D06M 15/277

(54) **Fluoralkylcarbamylacrylate und -methacrylate.**

(30) Priorität: **01.10.84 US 655835**

(43) Veröffentlichungstag der Anmeldung: **14.05.86 Patentblatt 86/20**

(45) Bekanntmachung des Hinweises auf die Patenterteilung: **08.03.89 Patentblatt 89/10**

(84) Benannte Vertragsstaaten: **CH DE FR GB IT LI**

(56) Entgegenhaltungen:
**FR-A- 2 154 210**
**US-A- 2 718 516**
**US-A- 3 544 663**
**US-A- 3 654 244**
**US-A- 3 655 732**
**US-A- 4 321 404**

**PATENT ABSTRACTS OF JAPAN, unexamined applications, C Field, Band 7, Nr. 213, 20. September 1983. THE PATENT OFFICE JAPANESE GOVERNMENT, Seite 12 C 197**

(73) Patentinhaber: **CIBA-GEIGY AG, Klybeckstrasse 141, CH-4002 Basel(CH)**

(72) Erfinder: **Falk, Robert A., 35 Glenside Drive, New City New York 0977(US)**

EP 0 181 281 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Vorliegende Erfindung betrifft Fluoralkylcarbamylacrylate und -methacrylate, Polymere daraus sowie deren Verwendung zur Hydrophobierung und Oleophobierung von Cellulose- sowie natürlichen und synthetischen Polyamidsubstraten.

In der US-A 4 321 404 sind strahlungshärtbare Zusammensetzungen mit Perfluoralkylalkyloxy enthaltenden Acrylaten und Methacrylaten beschrieben, die zur Herstellung klebriger Beschichtungen dienen.

Gegenstand vorliegender Erfindung sind somit neue Fluoroalkylcarbamylacrylate und – methacrylate – sowie Polymere daraus – der Formel

(1) 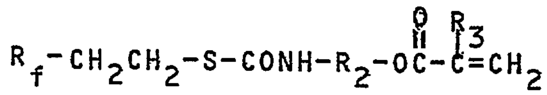

worin $R_f$ für Perfluoralkyl oder omega-Hydroperfluoralkyl, $R_2$ für Alkylen mit 1 bis 12 Kohlenstoffatomen und $R_3$ für Wasserstoff oder Methyl stehen.

Ein weiterer Gegenstand dieser Erfindung ist ein einfaches, wirtschaftliches Verfahren zur Herstellung von solchen Acrylat- und Methacrylatmonomeren.

Noch ein weiterer Gegenstand vorliegender Erfindung sind Zusammensetzungen und ein Verfahren zur Hydrophobierung und Oleophobierung von Cellulose- sowie natürlichen und synthetischen Polyamidsubstraten unter Verwendung solcher die Perfluoralkylcarbamylacrylate und -methacrylate bzw. deren Monomere oder Polymere enthaltenden Zusammensetzungen.

Die $R_f$-Gruppe enthält im allgemeinen 1 bis 18 Kohlenstoffatome, vorzugsweise 3 bis 12 Kohlenstoffatome und besonders bevorzugt 6 bis 12 Kohlenstoffatome. Die $R_f$-Gruppe kann geradkettig oder verzweigt sein. Als $R_f$-Gruppen sind Perfluoralkylreste bevorzugt, wie die perfluorierten Derivate von Propyl, Butyl, Pentyl, Hexyl, Heptyl, Octyl, Nonyl, Decyl und Dodecyl sowie deren Isomere.

$R_2$ bedeutet vorzugsweise Alkylen mit 2 bis 6 Kohlenstoffatomen, besonders bevorzugt geradkettiges Alkylen mit 2 bis 6 Kohlenstoffatomen und ganz besonders bevorzugt Äthylen.

$R_3$ steht besonders bevorzugt für Methyl.

Die Verbindungen der Formel (1) stellt man zweckmässig durch Umsetzung einer Verbindung der Formel

(2) $R_f{-}CH_2CH_2{-}S{-}H$ ,

worin $R_f$, die oben angegebene Bedeutung hat, mit einer bifunktionellen Verbindung der Formel

(3) 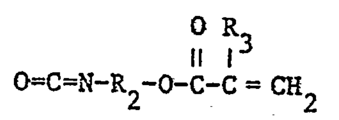 ,

worin $R_2$ und $R_3$ die oben angegebenen Bedeutungen haben, bei einer Temperatur zwischen –20°C und 100°C, vorzugsweise 10°C bis 50°C, gegebenenfalls in Gegenwart eines inerten organischen Lösungsmittels wie Petroläther, 1,1,2-Trichlortrifluoräthan, Methyläthylketon, Toluol, 2-Äthoxyäthylacetat und Hexafluorxylol her. Zweckmässig lässt sich dieses Verfahren in Gegenwart oder Abwesenheit eines üblichen Katalysators, wie eines Urethankatalysators, z.B. Dibutylzinndilaurat und/oder eines tertiären Amins einschliesslich Trialkylaminen, Dialkylaralkylaminen, Dialkylarylaminen, N-alkylheterocyclischen Aminen, aromatisch-heterocyclischen Aminen und dergleichen, wie Triäthylamin, N,N-Dimethylbenzylamin, N,N-Dimethylanilin, N-Methylpiperidin oder Pyridin, durchführen. Da die Umsetzung unter Addition verläuft, entstehen keine Nebenprodukte in bedeutsamem Ausmass, wodurch sich die Reinigung und Gewinnung vereinfacht. Häufig lässt sich das Reaktionsprodukt ohne irgendwelche Reinigung des gewünschten Produkts verwenden. Andernfalls kann man das Vinylmonomer nach herkömmlichen Kristallisationsmethoden reinigen und durch Filtrieren und Eindampfen gewinnen.

Die Ausgangsstoffe der Formeln (2) und (3) sind aus dem Stand der Technik bekannt.

Die Monomeren der Formel (3) sind beispielsweise in den U.S. Patenten 2 718 516 und 2 821 544 sowie in J. Coatings Technology, Band 55, (703), S. 55–61 (1983) beschrieben. Solche Monomere der Formel (3) werden bevorzugt, worin $R_2$ für Alkylen mit 2 bis 6 Kohlenstoffatomen und $R_3$ für Wasserstoff oder Methyl stehen, und dazu gehören Isocyanatoäthyl-acrylat, Isocyanatoäthyl-methacrylat, Isocyanatobutyl-acrylat, Isocyanatobutyl-methacrylat, Isocyanatohexyl-acrylat und Isocyanatohexyl-methacrylat. Wegen seiner leichten Copolymerisation und Zugänglichkeit wird Isocyanatoäthyl-methacrylat als Monomer bevorzugt.

Typische Thiole der Formel (2) entsprechen der Formel $R_f{-}CH_2CH_2{-}SH$, worin $R_f$ die oben angegebene Bedeutung hat. Solche Perfluoralkylthiole sind dem Stand der Technik wohlbekannt. So wurden beispielsweise Thiole der Formel $R_f{-}CH_2CH_2{-}SH$ in zahlreichen U.S. Patenten beschrieben, einschliesslich 2 894 991, 2 961 470, 2 965 677, 3 088 849, 3 172 190, 3 544 663 und 3 655 732. So offenbart U.S. Patent 3 655 732 Mercaptane der Formel $R_fCH_2CH_2S{-}H$, worin $R_f$ für Perfluoralkyl steht.

U.S. Patent 3 544 663 lehrt, dass sich das Mercaptan $R_fCH_2CH_2SH$, worin $R_f$ für Perfluoralkyl mit 5 bis 13 Kohlenstoffatomen steht, durch Umsetzung des Perfluoralkylalkylenjodids mit Thioharnstoff oder durch Addition von $H_2S$ an ein perfluoralkylsubstituiertes Äthylen ($R_f$–CH=$CH_2$), das seinerseits durch Dehydrohalogenierung des Halogenids $R_f$–$CH_2CH_2$-Halogen erhältlich ist, herstellen lässt. Die Umsetzung des Jodids $R_f$–$CH_2CH_2$–J mit Thioharnstoff mit nachfolgender Hydrolyse zur Mercaptan $R_f$-$CH_2CH_2$–SH stellt den bevorzugten Syntheseweg dar. Besonders bevorzugt sind dabei die Thiole der Formel $R_f$–$CH_2CH_2$–SH, worin $R_f$ für Perfluoralkyl mit 6 bis 12 Kohlenstoffatomen steht. Diese $R_f$-Thiole sind aus $R_f$–$CH_2CH_2$–J und Thioharnstoff in sehr hoher Ausbeute herstellbar.

Typische, erfindungsgemäss in Betracht kommende Thiole der Formel (2) sind:

$CF_3CF_2CH_2CH_2SH$
$C_{12}F_{25}CH_2CH_2SH$
$C_8F_{17}CH_2CH_2SH$
$C_6F_{13}CH_2CH_2SH$
$C_{10}F_{21}CH_2CH_2SH$

Die vorliegenden α, β-ungesättigten Estermonomeren der Formel (1) sind sehr reaktionsfähig und besitzen eine starke Tendenz zur Bildung von Homo- oder Copolymeren.

Die Polymerisation der erfindungsgemässen $R_f$-Acrylat- und $R_f$-Methacrylatmonomeren ist analog der Polymerisation solcher Monomerer, wie sie in Houben-Weyl, Methoden der Organischen Chemie, Band 14/1, S. 1044–1047 (Georg Thieme Verlag, Stuttgart, 1961 oder C. E. Schildknecht, Vinyl and Related Polymers [Vinyl- und verwandte Polymere], S. 179–255 (John Wiley and Sons, Inc., New York 1952) beschrieben sind.

Die Polymerisation lässt sich allgemein in der Masse, in Lösung, in Suspension oder in Emulsion durchführen. Lösungs- und Emulsionspolymerisation werden bevorzugt.

Bei der Emulsionspolymerisation werden das bzw. die zu polymerisierende(n) Monomer(en) in einer wässrigen Lösung eines Tensids auf eine vorgegebene Monomerkonzentration von etwa 5% bis etwa 50% zusammenemulgiert. Die Temperatur wird üblicherweise auf zwischen 40°C und 70°C erhöht, um die Polymerisation in Gegenwart eines Katalysators zu bewirken. Als geeigneter Katalysator kommen sämtliche der allgemein bekannten Mittel zur Einleitung der Polymerisation einer äthylenisch ungesättigten Verbindung in Frage. Die Konzentration des Katalysators für die Polymerisation liegt üblicherweise zwischen 0,1% und 2% bezogen auf das Monomerengewicht.

Zu geeigneten Tensiden oder Emulgatoren zählen kationen-aktive, anionen-aktive und nicht-ionogene Typen. Da die kationen-aktiven und nicht-ionogenen Typen in den meisten Textilbehandlungsbädern verwendbar sind, werden sie bevorzugt. Der hydrophobe Teil des Tensids kann aus Kohlenwasserstoff oder fluoriertem Kohlenwasserstoff bestehen.

Zu geeigneten Tensiden bzw. Emulgatoren gehören beispielsweise nicht-ionogene Tenside, bei denen als hydrophile Gruppen eine Poly-(äthoxy)-Gruppe und als hydrophober Teil entweder eine Kohlenwasserstoff- oder Fluorkohlenstoffgruppe vorliegen, wie die Äthylenoxydkondensate von Alkylphenolen, Alkanolen, Alkylaminen, Alkylthiolen, Alkylcarbonsäuren, Fluoralkylcarbonsäuren, Fluoralkylaminen und dergleichen.

Beispiele für geeignete kationen-aktive Tenside sind unter anderem quartäre Ammoniumsalze oder Aminsalze, die mindestens eine langkettige Alkyl-, Fluoralkyl- oder mit höherem Alkyl substituierte Benzol- oder Naphthalingruppe enthalten, die den hydrophoben Teil liefert.

Die Polymerisation wird vorzugsweise während einer solchen Zeitspanne durchgeführt, dass eine im wesentlichen quantitative Umsetzung des fluorierten Monomers erzielt wird. Die optimale Reaktionszeit ist dabei vom verwendeten Katalysator und der Polymerisationstemperatur sowie anderen Bedingungen abhängig, liegt aber im allgemeinen im Bereich von 0,5 bis 24 Stunden.

Die Polymerisationstemperatur hängt vom gewählten Katalysator ab. Bei der Emulsionspolymerisation in wässrigen Medien liegt sie im allgemeinen im Bereich von 20°C bis 90°C. So weit möglich wird die Polymerisation allgemein am zweckmässigsten und vorzugsweise bei Atmosphärendruck durchgeführt.

Bei der Lösungspolymerisation löst man das bzw. die Monomere(n) in einem geeigneten Lösungsmittel, wie fluorierten Lösungsmitteln, zum Beispiel Hexafluorxylol, Trifluortoluol oder deren Gemischen mit Aceton und/oder Essigester, und polymerisiert unter Verwendung von Initiatoren, wie Azobisisobutyronitril oder anderen Azoinitiatoren in Konzentrationen von 0,1 bis 2,0%, bezogen auf das Monomerengewicht, in einem Reaktionsgefäss bei 40°–100°C unter Stickstoff.

Die Monomeren der Formel (1) lassen sich homopolymerisieren oder mit herkömmlichen Monomeren copolymerisieren. Bei diesen kann es sich um hydrophile oder hydrophobe Monomere oder Gemische solcher handeln. Die entstandenen Polymeren enthalten somit Struktureinheiten der Formel

(4) 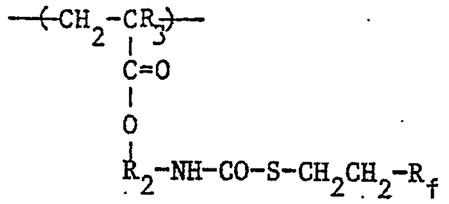

worin $R_f$, $R_1$, $R_2$, $R_3$ und X die oben angegebenen Bedeutungen haben. Um schmutzabweisende Eigenschaften auf Textilmaterialien zu erhalten, setzt man zweckmässig hydrophile Comonomere ein. Sind sowohl hydrophobe als auch oleophobe Eigenschaften erwünscht, so besitzen die herkömmlichen Comonomeren vorteilhafterweise vorwiegend hydrophoben Charakter, um optimale Ergebnisse zu erzielen. Während die Menge an in der Copolymerisation mit den herkömmlichen Comonomeren verwendeten Monomeren der Formel (1) je nach dem in der fertigen polymeren Ausrüstung erwünschten Oleophobierungs- und gegebenenfalls Hydrophobierungsgrad in weiten Grenzen schwanken kann, setzt man zweckmässig mindestens etwa 0,1 Gewichtsprozent bis etwa 99,9 Gewichtsprozent eines Monomeren der Formel (1) oder eines Gemisches solcher Monomerer pro Gewichtseinheit der Mischung aus herkömmlichen Comonomeren und Monomer der Formel (1) ein.

Zur Herstellung von Copolymeren der neuen Monomeren der Formel (1) verwendbare Comonomere sind unter anderem, ohne darauf beschränkt zu sein:
Äthylen sowie Chlor-, Fluor-, Amido- und Cyanderivate des Äthylens, wie Vinylchlorid, Vinylidenchlorid, Vinylfluorid, Acrylnitril, Methacrylnitril, Acrylamid, Methacrylamid, N,N-Dimethylacrylamid, Tetrafluoräthylen und Hexafluorpropylen; Acrylat- und Methacrylatmonomere, insbesondere solche mit 1 bis 18 Kohlenstoffatomen in den Estergruppen, wie n-Propylmethacrylat, 2-Methylcyclohexylmethacrylat, Methylmethacrylat, t-Butylmethacrylat, n-Butylmethacrylat, Methylacrylat, Äthylacrylat, Propylacrylat, Butylacrylat, 3-Methylpentylacrylat, Octylacrylat, Tetradecylacrylat, s-Butylacrylat, 2-Äthylhexylacrylat, 2-Methoxyäthylacrylat und Phenylacrylat; Diene, insbesondere 1,3-Butadien, Isopren und Chloropren, 2-Fluorbutadien, 1,1,3-Trifluorbutadien, 1,1,2,3-Tetrafluorbutadien, 1,1,2-Trifluor-3,4-dichlorbutadien sowie Tri- und Pentafluorbutadien und Tri- und Pentafluorisopren; Stickstoff-Vinylmonomere, wie Vinylpyridin, N-Vinylamide, Vinylsuccinimid, Vinylpyrrolidon, N-Vinylcarbazol und dergleichen, Styrol und verwandte Monomere, die leicht wie o-Methylstyrol, p-Methylstyrol, 3,4-Dimethylstyrol, m-Äthylstryrol und 2,5-Diäthylstyrol; Vinylester, z.B. Vinylacetat und Vinylester substituierter Säuren, wie beispielsweise Vinylmethoxyacetat, Vinyltrimethylacetat, Vinylisobutyrat, Isopropenylbutyrat, Vinyllactat, Vinylcaprylat, Vinylpelargonat, Vinylmyristat, Vinyloleat und Vinyllinoleat; sowie Vinylester aromatischer Säuren, wie Vinylbenzoat. Propylen, Butylen und Isobutylen sind die bevorzugten α-Olefine zur Verwendung als Comonomere mit den neuen Fluormonomeren der Formel (1), wobei geradkettige und verzweigte α-Olefine mit bis zu 10 Kohlenstoffatomen in der Seitenkette verwendbar sind. Als Comonomere mit einigen der neuen Monomeren der Formel (1) sind auch perfluorierte Seitenketten enthaltende Vinylmonomere verwendbar. Beispiele für solche perfluorierte Monomere sind fluorierte Alkylgruppen enthaltende Vinylester, die in U.S. Patenten 2 592 069 und 2 436 144 offenbart sind. Weitere nützliche Monomere sind Acrylate und Methacrylate sowie deren Derivate, wie sie aus U.S. Patenten 2 628 958, 3 256 230, 2 839 513, 3 282 905, 3 252 932 und 3 304 278 bekannt sind.

Wie erwähnt, kann es auch wünschenswert sein, eine geringe Menge anderer reaktionsfähiger Comonomerer mitzuverwenden, z.B. um die Eigenschaften der neuen, bei der Anwendung dieser Erfindung erhaltenen Textilausrüstungen beim Waschen und bei der chemischen Reinigung zu verbessern. Solche Monomere wirken als Vernetzungsmittel beim Härtungsvorgang und werden im allgemeinen in Mengen von 0,01% bis 5% vorzugsweise 0,1% bis 2 Gew.-%, bezogen auf das Gewicht der Comonomeren, eingesetzt.

Beispiele für solche mitverwendbare reaktionsfähige Monomere sind Acrylsäure, Methacrylsäure, Acrylamid, Methacrylamid, N-Methylolacrylamid, 2-Hydroxyäthylmethacrylat oder -acrylat, Hydroxypropylacrylat oder -methacrylat und t-Butylaminoäthylmethacrylat sowie Glycidylmethacrylat. Darunter sind N-Methylolacrylamid und 2-Hydroxyäthylmethacrylat bevorzugt.

Beschichtungen aus den erfindungsgemässen Homopolymeren und Copolymeren können aus Lösungen oder wässrigen Emulsionen hergestellt und aus diesen appliziert werden. Als Lösungsmittel eignen sich z.B. Fluoralkane, Fluorchloralkane, fluoralkylsubstituierte Aromaten, Alkylester von Perfluoralkansäuren, chlorierte Alkane oder Aromaten, aromatische Kohlenwasserstoffe, Ketone, Ester und Äther. Besonders zweckmässige Lösungsmittel sind fluorierte Flüssigkeiten und insbesondere α,α,α-Trifluortoluol, auch als Benzotrifluorid bekannt, Hexafluorxylol und deren Gemische mit Essigester oder Aceton und dergleichen. Die Konzentrationen der erfindungsgemässen fluorierten Polymeren im Lösungsmittel zur Erzeugung von Überzügen mit wirksamen öl- und wasserabstossenden Eigenschaften liegt im allgemeinen im Bereich von 0,01 bis 10% und vorzugsweise 0,1 bis 2,0 Gew.-%. Gemische aus Emulsionen der erfindungsgemässen Polymeren mit Emulsions-Gemischen anderer Polymerer und Copolymerer sind besonders zweckmässig für Textilausrüstungen. Die Polymeren und Copolymeren gehören im allgemeinen dem nichtfluorierten Typ an; wie unten angegeben sind jedoch andere fluorierte Polymere und Copolymere gewünschtenfalls verwendbar. Beispiele für in solchen Gemischen verwendbare nichtfluorierte Polymere sind, Polymere und Copolymere von Alkylacrylaten und Alkylmethacrylaten, wie Methylmethacrylat, Äthylmethacrylat, Hexylmethacrylat und n-Octylmethacrylat. Poly-n-octylmethacrylat ist als solches Polymer besonders geeignet. Ferner kommen dabei Polymere und Copolymere von Acrylsäure, Methacrylsäure, Styrol, Alkylstyrol, Butadien, 2-Methyl-1,3-butadien, 2-Chlor-1,3-butadien, Polymere und Copolymere von Vinylestern, wie Vinylacetat, Vinylbutyrat, Vinyllaurat, Vinylstearat und Vinyl-2-äthylhexanoat, Polymere und Copolymere von Vinylhalogeniden und Vinylidenhalogeniden, wie Vinylchlorid, Vinylidenchlorid, Vinylfluorid und Vinylidenfluorid, Polymere und Copolymere von Allylestern, wie Allylpropionat oder Allylcaprylat, Polymere und Copolymere von Vinyläthern, wie Methylvinyläther, Cetylvinyläther und dergleichen sowie Polymere und Copolymere von Acrylamid, Methacrylamid, N-Methylolacrylamid, N-Methylolmethacrylamid, N-Isopropylacrylamid und Methacrylnitril in Frage.

Die hier offenbarten Polymeren besitzen wünschenswerte schmutzabweisende Eigenschaften. Die relative Wirksamkeit der Polymeren wird dabei zweckmässig durch Bewertung der Öl- und Wasserabstossung gemessen. In den Beispielen wurden die folgenden Prüfmethoden angewandt:

Der AATCC-Ölwert wurde nach der Normprüfmethode 118–1966 T der American Association of Textile Chemists and Colorists bestimmt. Die Bewertungen gehen von 0 (Minimum) bis 8 (Maximum). Ein in den Vereinigten Staaten allgemein annehmbares Niveau auf schmutzabweisenden Geweben stellt ein Ölabstossungswert von 4 dar.

Eine weitere Ölabstossungsmethode ist das 3-M-Ölprüfverfahren nach Grajek und Peterson, Textile Research Journal, April 1962, S. 323.

Der AATCC-Sprühwasserprüfwert wurde nach der Normprüfmethode 22-1966 der American Association of Textile Chemists and Colorists XXVII, 1961, S, 1952 (auch als ASTM-D-583-58 bezeichnet) bestimmt. Die Bewertungen gehen von 0 (Minimum) bis 100 (Maximum).

Die Polymeren werden in den Applikationsbeispielen so auf Polyester/Baumwolle (65%/35%) aufgebracht, dass sich eine Konzentration von 0,08 bis 0,12% Fluor, bezogen auf das Gewebegewicht, ergibt.

Die nachfolgenden Beispiele dienen nur zur Erläuterung.

Beispiel 1: 2-(1,1,2,2-Tetrahydroperfluoroctylthiocarbonyl)-aminoäthyl-methacrylat

Man bringt 38,4 g (0,1 Mol) 1,1,2,2-Tetrahydrofluoroctanthiol unter Stickstoff in 150 ml 1,1,2-Trichlortrifluoräthan bei 0°–5°C 12 Stunden lang in Gegenwart katalytischer Mengen Triäthylamin und Dibutylzinn-dilaurat mit 15,5 g (0,1 Mol) 2-Isocyanatoäthyl-methacrylat zur Reaktion. Das Lösungsmittel wird abgedampft, und das verbleibende Produkt wird aus n-Hexan umkristallisiert, wobei man 44,1 g (82,4% der Theorie) der Verbindung der Formel

$C_6F_{13}CH_2CH_2SCONHCH_2CH_2O_2CC(CH_3)=CH_2$

als weissen kristallinen Feststoff vom Schmelzpunkt 55°C erhält.

NMR zeigt Protonenresonanzen bei δ 1,96, 3 $C(CH_3)CH_2$-Protonen; δ 2,08–2,89, 2 $C_6F_{13}CH_2CH_2$-Protonen; δ 3,14, 2 $C_6F_{13}CH_2CH_2$-Protonen; δ 3,64, 2 $NHCH_2CH_2O$-Protonen; δ 4,27, 2 $NHCH_2CH_2O$-Protonen; δ 5,58, 1 Proton und δ 6,08, 1 $C(CH_3)CH_2$-Proton.

Analyse für $C_{15}H_{14}F_{13}NO_3S$:
Berechnet: C, 33,6; H, 2,6; N, 2,6; F, 46,1
Gefunden: C, 33,6; H, 2,7; N, 2,8; F, 45,7

Beispiel 2: 2-(1,1,2,2-Tetrahydroperfluordecylthiocarbonyl)-aminoäthyl-methacrylat

Man bringt 50,5 g (0,105 Mol) 1,1,2,2-Tetrahydroperfluordecanthiol unter Stickstoff in 150 ml 1,1,2-Trichlortrifluoräthan bei 0°–5°C 12 Stunden lang in Gegenwart katalytischer Mengen Triäthylamin und Dibutylzinn-dilaurat mit 15,5 g (0,1 Mol) 2-Isocyanatoäthyl-methacrylat zur Reaktion. Das kristallisierte Produkt wird abfiltriert und gewaschen, wobei man 26,3 g (41,4% der Theorie) des Produkts der Formel

$C_8F_{17}CH_2CH_2SCONHCH_2CH_2O_2CC(CH_3)=CH_2$

als weissen kristallinen Feststoff vom Schmelzpunkt 66°C erhält.

NMR zeigt Protonenresonanzen bei δ 1,89, 3 $C(CH_3)CH_2$-Protonen; δ 1,89–2,89, 2 $C_8F_{17}CH_2CH_2$-Protonen; δ 3,08, 2 $C_8F_{17}CH_2CH_2$-Protonen; δ 3,64 2 $NHCH_2CH_2$-Protonen; δ 4,27, 2 $NHCH_2CH_2$-Protonen; δ 5,64, 1 Proton, und δ 6,14, 1 $C(CH_3)CH_2$-Proton.

Analyse für $C_{17}H_{14}F_{17}NO_3S$:
Berechnet: C, 32,1; H, 2,2; N, 2,2; F, 50,8
Gefunden: C, 32,3; H, 2,3; N, 2,4; F, 50,6

Beispiel 3: 2-(1,1,2,2-Tetrahydroperfluordodecylthiocarbonyl)-aminoäthyl-methacrylat

Man bringt 58,0 g (0,1 Mol) 1,1,2,2-Tetrahydroperfluordodecanthiol unter Stickstoff in 150 ml 1,1,2-Trichlortrifluoräthan bei 40°C 30 Minuten lang in Gegenwart einer katalytischen Menge Triäthylamin (1 ml) mit 16,27 g (0,105 Mol) 2-Isocyanatoäthyl-methacrylat zur Reaktion. Das Lösungsmittel wird abgedampft und das verbleibende Produkt in Hexan suspendiert, abfiltriert, gewaschen und getrocknet, wobei man 71 g (95,5% der Theorie) der Verbindung der Formel

$C_{10}F_{21}CH_2CH_2SCONHCH_2CH_2O_2CC(CH_3)_2{=}CH_2$
als weissen kristallinen Feststoff vom Schmelzpunkt 81–82°C erhält.

NMR zeigt Protonenresonanzen bei δ 1,95, 3 $C(CH_3)CH_2$-Protonen; δ 2,14–2,77, 2 $C_{10}F_{21}CH_2CH_2$-Protonen; δ 3,14, 2 $C_{10}F_{21}CH_2CH_2$-Protonen; δ 3,6, 2 $NHCH_2CH_2O$-Protonen; δ 4,25, 2 $NHCH_2CH_2O$-Protonen; δ 5,58, 1 Proton und δ 6,12, 1 $C(CH_3)CH_2$-Proton; δ 5,84, 1 NH-Proton.
Analyse für $C_{19}H_{14}F_{21}NO_3S$:
Berechnet: C, 31,0; H, 1,9; F, 54,2
Gefunden: C, 31,2; H, 1,9; F, 53,9

Beispiel 4: 2-(1,1,2,2-Tetrahydroperfluoralkylthiocarbonyl)-aminoäthyl-methacrylat

Man bringt 60,93 g (0,1 Mol) 1,1,2,2-Tetrahydroperfluoralkanthiol (die Verteilung stellt ein Gemisch aus 4,1% $C_8$, 69,3% $C_{10}$, 20,7% $C_{12}$, 3,8% $C_{14}$ und 0,5% $C_{16}$ dar) unter Stickstoff in 300 g Heptan bei 60°C 30 Minuten lang in Gegenwart einer katalytischen Menge Triäthylamin (1 ml) mit 15,81 g (0,102 Mol) 2-Isocyanatoäthyl-methacrylat zur Reaktion. Man kühlt die Suspension auf 0–5°C, filtriert, wäscht und trocknet, wobei man 72,8 g (95,3% der Theorie) der Verbindung der Formel
$R_fCH_2CH_2SCONHCH_2CH_2O_2CC(CH_3){=}CH_2$
als weissen kristallinen Feststoff vom Schmelzpunkt 78–80°C erhält.

NMR zeigt der Theorie entsprechende Protonresonanzen.
Analyse:
Berechnet: F, 54,2
Gefunden: F, 54,4

Beispiel 5: Polymer des 2-(1,1,2,2-Tetrahydroperfluoroctylthiocarbonyl)-aminoäthyl-methacrylats

Man erhitzt 5,0 g 2-(1,1,2,2-Tetrahydroperfluoroctylthiocarbonyl)-aminoäthyl-methacrylat, 0,006 Azobisisobutyronitril und 10 ml Tetrachlorkohlenstoff unter Stickstoff 6 Stunden lang am Rückfluss. Die Lösung wird zur Trockne eingedampft, wobei man das Polymer als Harz erhält, das sich in 1,1,2-Trichlortrifluoräthan auflösen und mit Hexan ausfällen lässt. Das Polymer wird filtriert, mit Heptan gewaschen und bei 50°C im Durchlufttrockenschrank getrocknet, wobei man 2,6 g (52% Ausbeute) weisses Pulver erhält. Analyse:
Berechnet: C, 33,64; H, 2,6; N, 2,6; F, 46,16
Gefunden: C, 33,5; H, 2,4; N, 2,6; F, 45,65

Die Polymerisation lässt sich ähnlich in Dioxan oder Hexan durchführen. Hexan ist als Lösungsmittel bevorzugt, da das gebildete Polymer sofort ausfällt und sich in 92% Ausbeute gewinnen lässt.

Die Polymerisation wird auch in Hexafluorxylol bei 30% Feststoffgehalt in einer Ampulle bei 100°C mit 0,5% 1,1'-Azobis-(cyancyclohexan) durchgeführt. NMR zeigte, dass kein restliches Vinylmonomer vorlag.

Das in Hexan hergestellte Polymer wird mittels Differentialscanningkalorimetrie (DSK) bei 10°C/Min. und 100 ml $N_2$/Min. in offenen Aluminiumschalen mit einem DuPont 990 Thermal Analyzer und einem DSK-Zellenunterteil untersucht. Dabei findet man einen Glasübergang zwischen 50 und 70°C (Tg~60°C), einen reversiblen endothermen Schmelzübergang [$T_x$ (extrapolierte Einsetztemperatur) – 127°C, T-Spitze – 140°C] und einen irreversiblen Zersetzungsübergang ($t_o$ – 190°C, $T_x$ – 243°C, T-Spitze – 274°C).

Thermogravimetrische Analysen (TGA) wurden bei 10°C/Min. und 100 ml $N_2$/Min. mit einem DuPont 951 TGA-Modul durchgeführt. Dabei findet man 76% Verlust von 150 bis 305°C und einen zweiten 24%igen Verlust in Stufen von 305 bis 475°C. Der Verlust beträgt 1 Gew.-% bei 207°C, 10% bei 247°C und 50% bei 282°C.

Beispiel 6: Polymer des 2-(1,1,2,2-Tetrahydroperfluordecylthiocarbonyl)-aminoäthyl-methacrylats

Man erhitzt 5 g 2-(1,1,2,2-Tetrahydroperfluordecylthiocarbonyl)-aminoäthyl-methacrylat, 0,006 g Azobisisobutyronitril und 10 ml Tetrachlorkohlenstoff unter Stickstoff 6 Stunden lang am Rückfluss. Dabei fällt ein Harz aus, und das Gesamtpräparat wird zur Trockne eingedampft, in 1,1,2-Trichlortrifluoräthan wieder aufgelöst und mit Hexan ausgefällt und gewaschen, wobei man 4,3 g (86% Ausbeute) weisses Pulver erhält; Schmelzpunkt 140–150°C.
Analyse:
Berechnet: C, 32,1; H, 2,2; N, 2,2; F, 50,8
Gefunden: C, 32,2; H, 2,2; N, 2,2; F, 50,6

Die Polymerisation lässt sich ähnlich in Hexan durchführen, wobei das gebildete Polymer sofort ausfällt und in 96% Ausbeute gewonnen wird. Die Lösungspolymerisation in Hexafluorxylol kann 20 Stunden lang bei 30% Feststoffgehalt in einer Ampulle bei 105°C mit 2,5% 1,1'-Azobis-(cyancyclohexan) als Katalysator erfolgen. NMR an der viskosen Lösung zeigt kein restliches Monomer.

DSK-Untersuchungen des aus Tetrachlorkohlenstoff erhaltenen Polymeren werden wie in Beispiel 5 durchgeführt. Dabei findet man einen Glasübergang bei ungefähr 60°C, der je nach der thermischen Vorgeschichte bis auf 90°C ansteigen kann. Einem vermutlich durch Schmelzen verursachten, reversi-

blen endothermen Übergang ($T_x$ – 176°C, T-Spitze – 180°C) folgt ein breiter irreversibler endothermer Übergang ($T_o$ – 190°C, $T_x$ – 228°C, T-Spitze – 259°C), der mit Zersetzung verbunden ist und einen gelbbraunen Rückstand hinterlässt.

TGA-Untersuchungen wie in Beispiel 5 zeigen 0,8% Verlust bei 115–185°C (wahrscheinlich Lösungsmittel), 75% Verlust bei 185–310°C und 21% Verlust bei 310–500°C, wobei 3% Rückstand verbleiben.

Unter Ausserachtlassung des anfänglichen Lösungsmittelverlusts beträgt der Verlust 1% bei 207°C, 10% bei 246°C und 50% bei 273°C.

Beispiel 7:

Die Anwendung der Polymeren aus den vorangehenden Beispielen ist in Tabelle 1 erläutert. Die Materialien werden durch Foulardieren aus 1,1,1-Trichloräthan auf 65/35-Polyester/Baumwolle (0,10% Fluorgehalt) auf dem behandelten Gewebe aufgebracht und nach den Normprüfmethoden 118-1966 T bzw. 22-1966 der American Association of Textile Chemists and Colorists auf Öl- bzw. Wasserabstossung geprüft.

Tabelle 1

| Polymer aus Beispiel | Luftgetrocknet | | Im Trockenschrank getrocknet – bei 125°C/2 Min. | | bei 150°C/5 Min. | |
|---|---|---|---|---|---|---|
| | Öl | Sprühwasser | Öl | Sprühwasser | Öl | Sprühwasser |
| 5 (aus Hexafluorxylol) | 3–4 | 70 | 2 | 80 | 3 | 90+ |
| 6 (aus Hexafluorxylol) | 3–4 | $70^{-}$ | 3 | 80 | 5 | 80+ |
| 6 (aus Dioxan) | 3 | 50 | 3 | $70^{-}$ | – | – |

Beispiel 8:

Polymerfilme werden auf Glasplatten hergestellt, und diese zeigen die folgenden Kontaktwinkel (Grad)

| Polymer aus Beispiel | Herstellungslösungsmittel | Wasser | Methylenjodid | Hexadecan |
|---|---|---|---|---|
| 5 | HFX* | 110 | 95 | 75 |
| 6 | HFX* | 102 | 92 | 71 |

* Hexafluorxylol

Beispiel 9:

Die kritische Oberflächenspannung bei Benetzung wird nach der Methode von Zisman[1] unter Verwendung einer homologen Reihe Kohlenwasserstoffe bestimmt. Die Filme werden aus Hexafluorxylol gemäss Bernett[2] gegossen, und die Ergebnisse sind nachfolgend tabelliert:

| Homopolymer | $\gamma_c$ | (dyn/cm) |
|---|---|---|
| $C_6F_{13}CH_2CH_2SCONHCH_2CH_2OCC(CH_3)CH_2$– Bsp. 5 | Dioxan | 12,9 |
| $C_6F_{13}CH_2CH_2SCONHCH_2CH_2OCC(CH_3)CH_2$– Bsp. 5 | (HFX) | 13,6 |
| $C_8F_{17}CH_2CH_2SCONHCH_2CH_2OCC(CH_3)CH_2$– Bsp. 6 | (HFX) | 10,9 |
| $C_8F_{17}CH_2CH_2SCONHCH_2CH_2OCC(CH_3)CH_2$– Bsp. 6 | ($CCl_4$) | 10,4 |
| $C_7F_{15}CH_2O_2CC(CH_3)CH_2$– | Literatur[1] | 10,6 |
| $C_8F_{17}SO_2N(C_3H_7)CH_2CH_2O_2CCHCH_2$– | Literatur[1] | 11,1 |

[1] Bernett und Zisman, J. Phys. Chem. 66, 1207 (1962)
[2] Bernett, I.E. Chem. Prod. Res. Dev. 13, (4), 250 (1974)

## Patentansprüche

1. Verbindugen der Formel

(1) 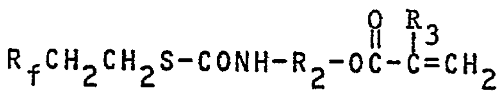 ,

worin $R_f$ für Perfluoralkyl oder omega-Hydroperfluoralkyl, $R_2$ für Alkylen mit 1 bis 12 Kohlenstoffatomen und $R_3$ für Wasserstoff oder Methyl stehen.

2. Verbindungen nach Anspruch 1, dadurch gekennzeichnet, dass die $R_f$-Gruppe 1 bis 18 Kohlenstoffatome enthält.

3. Verbindungen nach Anspruch 2, dadurch gekennzeichnet, dass als $R_f$-Gruppe Perfluoralkyl vorliegt.

4. Verbindungen nach Anspruch 1, dadurch gekennzeichnet, dass $R_3$ für Methyl steht.

5. Polymere mit Struktureinheiten der Formel

(4) 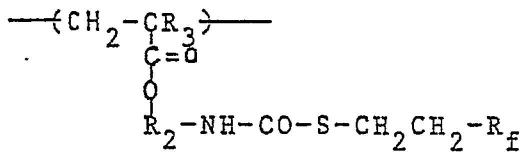

worin $R_f$, $R_2$ und $R_3$ die in Anspruch 1 angegebenen Bedeutungen haben.

6. Polymere nach Anspruch 5, dadurch gekennzeichnet, dass sie ein Homopolymer darstellen.

7. Polymere nach Anspruch 5, dadurch gekennzeichnet, dass sie ein Copolymer darstellen.

8. Verfahren zur Hydrophobierung und Oleophobierung von Textilien, dadurch gekennzeichnet, dass man diese Textilien aus einer Lösung oder einer wässrigen Emulsion mit einem Polymeren nach Anspruch 5 beschichtet.

9. Verfahren zur Herstellung von Verbindungen der Formel (1), dadurch gekennzeichnet, dass man eine Verbindung der Formel
(2) $R_f$–$CH_2CH_2$–S–H,
worin $R_f$ die in Anspruch 1 angegebene Bedeutung hat, mit einer bifunktionellen Verbindung der Formel

(3) 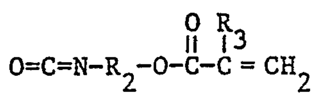

worin $R_2$ und $R_3$ die in Anspruch 1 angegebenen Bedeutungen haben, bei einer Temperatur zwischen –20 und 100°C in Gegenwart oder Abwesenheit eines inerten organischen Lösungsmittels und eines Katalysators umsetzt.

## Claims

1. A compound of the formula

(1) 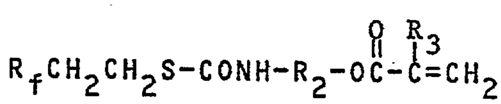 ,

in which
$R_f$ is perfluoroalkyl or omega-hydroperfluoroalkyl, $R_2$ is alkylene having from 1 to 12 carbon atoms and $R_3$ is hydrogen or methyl.

2. A compound according to claim 1, wherein the $R_f$ group contains from 1 to 18 carbon atoms.

3. A compound according to claim 2, wherein the $R_f$ group is perfluoroalkyl.

4. A compound according to claim 1, wherein $R_3$ is methyl.

5. A polymer containing structure units of the formula

(4) 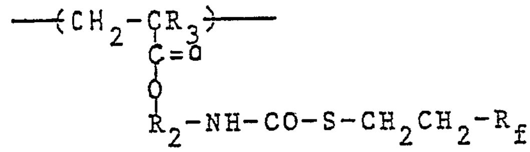

in which $R_f$, $R_2$ and $R_3$ are as defined in claim 1.

6. A polymer according to claim 5 which is a homopolymer.

7. A polymer according to claim 5 which is a copolymer.

8. A process for rendering a textile hydrophobic and oleophobic which comprises coating said textile with a polymer according to claim 5 from a solution or aqueous emulsion.

9. A process for the preparation of the compound of the formula (1) which comprises reacting a compound of the formula

(2) $R_f–CH_2CH_2–S–H$,

in which $R_f$ is as defined in claim 1 with a difunctional compound of the formula

(3) 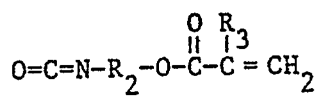

in which $R_2$ and $R_3$ are as defined in claim 1, at a temperature between −20 and 100°C in the presence or absence of an inert organic solvent and of a catalyst.

**Revendications**

1. Composés répondant à la formule 1:

(1) 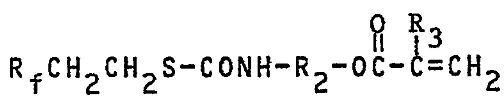 ,

dans laquelle $R_f$ représente un radical perfluoralkyle ou un radical ω-hydrogéno-perfluoralkyle, $R_2$ représente un radical alkylène contenant de 1 à 12 atomes de carbone, et $R_3$ représente l'hydrogène ou un radical méthyle.

2. Composés selon la revendication 1 caractérisés en ce que le radical $R_f$ contient de 1 à 18 atomes de carbone.

3. Composés selon la revendication 2 caractérisés en ce que $R_f$ est un radical perfluoralkyle.

4. Composés selon la revendication 1 caractérisés en ce que $R_3$ représente un radical méthyle.

5. Polymères comportant des motifs répondant à la formule 4:

(4) 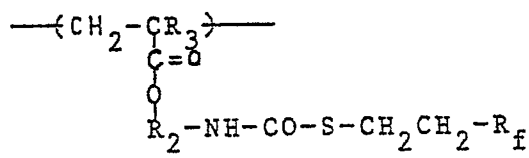

dans laquelle $R_f$, $R_1$, $R_2$, $R_3$ et X ont les significations qui leur ont été données à la revendication 1.

6. Polymères selon la revendication 5 caractérisés en ce qu'ils sont des homopolymères.

7. Polymères selon la revendication 5 caractérisés en ce qu'ils sont des copolymères.

8. Procédé pour hydrofuger et oléofuger des textiles, procédé caractérisé en ce qu'on enduit ces textiles avec un polymère selon la revendication 5 à partir d'une solution ou à partir d'une émulsion aqueuse.

9. Procédé de préparation des composés de formule 1, procédé caractérisé en ce qu'on fait réagir un composé répondant à la formule 2:

(2) $R_f–CH_2CH_2–S–H$

dans laquelle $R_f$ a la signification qui lui a été donnée à la revendication 1, avec un composé bifonctionnel répondant à la formule 3:

(3) $$O{=}C{=}N{-}R_2{-}O{-}\overset{\overset{O}{\|}}{C}{-}\overset{\overset{R_3}{|}}{C}{=}CH_2$$

dans laquelle $R_2$ et $R_3$ ont les significations qui leur ont été données à la revendication 1, à une température comprise entre –20°C et 100°C, en présence ou non d'un solvant organique inerte et d'un catalyseur.